# EUROPEAN PATENT APPLICATION

(11) **EP 4 597 719 A1**
(43) Date of publication of application: **06.08.2025**
(21) Application number: 23913991.8
(22) Date of filing: 04.01.2023
(51) Int. Cl.: H01M 50/40, H01M 50/489, H01M 10/0525, H01M 50/491

(54) **ELECTRODE ASSEMBLY, BATTERY CELL, BATTERY, ELECTRICAL DEVICE, AND SEPARATOR MANUFACTURING METHOD**

(71) Applicant: Contemporary Amperex Technology (Hong Kong) Limited, Central (HK)
(72) Inventor: ZHANG, Nan, Ningde City, Fujian 352100 (CN); YANG, Longfei, Ningde City, Fujian 352100 (CN); LIU, Xiaomei, Ningde City, Fujian 352100 (CN)
(74) Representative: Kraus & Lederer PartGmbB
(86) International application number: PCT/CN2023/070489
(87) International publication number: WO 2024/145832

(57) **Abstract**

Embodiments of this application provide an electrode assembly, a battery cell, a battery, an electric device, and a method for manufacturing a separator, and pertain to the field of battery technologies. The electrode assembly includes a positive electrode plate, a negative electrode plate, and a separator, and the separator is disposed between the positive electrode plate and the negative electrode plate; and the separator includes a first section, a second section, and a third section arranged sequentially in a width direction of the separator, and a porosity of the second section is less than both a porosity of the first section and a porosity of the third section. The electrode assembly provided by the embodiments of this application includes a separator with different porosities in different sections, which can alleviate precipitation of metal ions in the electrode assembly.

## Description

### TECHNICAL FIELD

This application relates to the field of battery technologies, specifically to an electrode assembly, a battery cell, a battery, an electric device, and a method for manufacturing a separator.

### BACKGROUND

Energy saving and emission reduction are crucial to the sustainable development of the automobile industry. Electric vehicles, with their advantages in energy conservation and emission reduction, have become an important part of the sustainable development of the automobile industry. For electric vehicles, battery technologies are an important factor in connection with their development.

In the process of manufacturing batteries, the safety of the battery is an issue that cannot be ignored. Therefore, how to improve battery safety is a technical problem to be resolved urgently in battery technologies.

### SUMMARY

An objective of this application is to provide an electrode assembly, a battery cell, a battery, an electric device, and a method for manufacturing a separator. The battery cell composed of the electrode assembly provided in embodiments of this application has high safety.

This application is implemented through the following technical solutions:

According to a first aspect, this application provides an electrode assembly. The electrode assembly includes a positive electrode plate, a negative electrode plate, and a separator, and the separator is disposed between the positive electrode plate and the negative electrode plate; and the separator includes a first section, a second section, and a third section arranged sequentially in a width direction thereof, and a porosity of the second section is less than both a porosity of the first section and a porosity of the third section.

According to the electrode assembly of the embodiments of this application, setting the porosity of the second section to be different from the porosity of the first section and the porosity of the third section results in different porosities of the different portions of the separator, such that different portions adapt to different metal ion penetration abilities. This can alleviate precipitation of metal ions from the surface of the negative electrode plate, such that the battery cell composed of this electrode assembly has high safety.

According to some embodiments of this application, the negative electrode plate has a first edge and a second edge opposite each other in a width direction thereof, the first edge falls into the first section, and the second edge falls into the third section.

**In** the above solution, observed along the thickness direction of the negative electrode plate, a projection of the first edge falls into a projection of the first section, a projection of the second edge falls into a projection of the third section, and a projection of the second section has a large overlapping area with a projection of the negative electrode plate in the width direction thereof. This can effectively weaken the ability of metal ions to penetrate the second section, thereby alleviating precipitation of metal ions from the surface of the negative electrode plate.

According to some embodiments of this application, the positive electrode plate has a third edge and a fourth edge opposite each other in a width direction thereof, the third edge falls into the first section, and the fourth edge falls into the third section.

In the above solution, observed along the thickness direction of the positive electrode plate, a projection of the third edge falls into a projection of the first section, a projection of the fourth edge falls into a projection of the third section, and a projection of the second section has a large overlapping area with a projection of the positive electrode plate in the width direction thereof. This can effectively weaken the ability of metal ions to penetrate the second section, reducing the amount of metal ions moving from the positive electrode plate to the negative electrode plate, thereby alleviating precipitation of metal ions from the surface of the negative electrode plate.

According to some embodiments of this application, in the width direction of the separator, two ends of the positive electrode plate extend beyond two ends of the second section by dimensions b1 and b2 respectively, and a dimension of the second section in the width direction of the separator is bx, satisfying 0<b1≤bx/2, and/or 0<b2≤bx/2.

In the above solution, the dimensions by which the two ends of the positive electrode plate extend beyond the two ends of the second section meet the above range, allowing a portion of the separator corresponding to the overlapping region of the positive electrode plate and negative electrode plate to have two different porosities, and resulting in different metal ion penetration abilities within the overlapping region. This can weaken the metal ion penetration ability in a partial region, thereby alleviating precipitation of metal ions from the surface of the negative electrode plate.

According to some embodiments of this application, bx/5≤b1≤bx/3, and/or bx/5≤b2≤bx/3.

In the above solution, in a case of bx/5≤b1≤bx/3 and/or bx/5≤b2≤bx/3 instead of 0<b1≤bx/2 and/or 0<b2≤bx/2, the precipitation of metal ions from the surface of the negative electrode plate can be reduced effectively, and more metal ions penetrate the overlapping region, allowing a large amount of current to flow through the electrode assembly.

According to some embodiments of this application, in the width direction of the separator, two opposite ends of the negative electrode plate extend beyond two opposite ends of the positive electrode plate respectively, and two opposite ends of the separator extend beyond the two opposite ends of the negative electrode plate respectively.

In the above solution, the two opposite ends of the negative electrode plate respectively extend beyond the two opposite ends of the positive electrode plate, effectively reducing precipitation of metal ions from the surface of the negative electrode plate. The two opposite ends of the separator respectively extend beyond the two opposite ends of the negative electrode plate, allowing the electrode assembly to have high safety and reducing the risk of short circuit due to contact between the positive electrode plate and the negative electrode plate.

According to some embodiments of this application, the porosity of the second section is K2, satisfying 25%≤K2≤35%.

In the above solution, the porosity of the second section meets the above range, and when applied to a battery cell, it can meet the requirement for metal ion penetration while also limiting the metal ion penetration efficiency. When the separator is applied to a battery cell, if the porosity of the second section is small (for example, less than 25%), the ability of metal ions to penetrate the separator is hindered, and the metal ion penetration rate is low. If the porosity of the second section is large (for example, greater than 35%), the metal ion penetration efficiency is high, which is likely to cause metal ions to precipitate from the surface of the negative electrode plate, thus causing safety risks.

According to some embodiments of this application, 28%≤K2≤32%.

In the above solution, in a case of 28%≤K2≤32% instead of 25%≤K2≤35%, a good metal ion penetration ability is ensured and the metal ion penetration efficiency can be limited.

According to some embodiments of this application, the porosity of the first section is equal to the porosity of the third section.

In the above solution, the porosity of the first section is the same as the porosity of the third section, facilitating processing and manufacturing.

According to some embodiments of this application, the porosity of the first section is K1, and the porosity of the third section is K3, satisfying 35%≤K1=K395%.

In the above solution, the porosity of the first section and the porosity of the third section meet the above range. When applied to a battery cell, they have both a high metal ion penetration ability and a good electrolyte retention ability. If K1 (K3) is small (for example, less than 35%), the metal ion penetration capability is weak; and if K1 (K3) is large (for example, greater than 45%), the battery cell composed of this separator is prone to self-discharge, reducing the capacity of the battery cell.

According to some embodiments of this application, 38%≤K1=K3≤2%.

In the above solution, in a case of 38%≤K1=K3≤2% instead of 35%≤K1=K3≤45%, the separator has a good metal ion penetration ability when applied to a battery cell, reducing the risk of metal ions precipitating from the negative electrode plate, and the risk of self-discharge in the battery cell.

According to some embodiments of this application, the porosity of the first section is greater than the porosity of the third section.

In the above solution, the porosity of the first section is greater than the porosity of the third section, allowing the separator to have multiple regions with different porosities, which can meet the requirement for different metal ion penetration abilities at different positions.

According to some embodiments of this application, the porosity of the first section is K1, and the porosity of the third section is K3, respectively satisfying 45%≤K1≤55%, and 35%≤K3≤45%.

In the above solution, when the separator is applied to a battery cell, the porosity of the first section and the porosity of the third section meet the above range. The separator has different metal ion penetration abilities to adapt to different scenarios.

According to some embodiments of this application, 48%≤K1≤52%, and 38%≤K3≤42%.

In the above solution, in a case of 48%≤K1≤52% and 38%≤K3≤42% instead of 45%≤K1≤55% and 35%≤K3≤45%, the separator has a good metal ion penetration ability when applied to a battery cell, reducing the risk of metal ions precipitating from the negative electrode plate, and the risk of self-discharge in the battery cell.

According to some embodiments of this application, a dimension of the first section in the width direction of the separator is equal to a dimension of the third section in the width direction of the separator.

In the above solution, the dimensions of the first section and the third section in the width direction of the separator are equal, facilitating processing and manufacturing.

According to a second aspect, an embodiment of this application provides a battery cell, including a housing and the electrode assembly provided in any one of the above embodiments, where the electrode assembly is disposed in the housing.

According to some embodiments of this application, in a height direction of the battery cell, the first section is located above the third section.

In the above solution, the first section is located above the third section, the porosity of the first section is greater than the porosity of the second section, the first section has a good electrolyte retention ability, and the metal ion penetration ability of the second section is weak. This can alleviate the problem of precipitation of metal ions from the surface of the negative electrode plate at positions corresponding to the first section and the second section in the height direction of the battery cell.

According to some embodiments of this application, in the width direction of the separator, a dimension of the housing is a, and the dimension of the second section is bx, satisfying bx=a/2.

In the above solution, the dimension of the second section in the width direction of the separator matches the dimension of the housing in the width direction of the separator. Along the width direction of the separator, the projection of the second section on the negative electrode plate has a large corresponding region with the negative electrode plate, which can alleviate the problem of precipitation of metal ions from the surface of the negative electrode plate at a position corresponding to the second section, allowing the battery cell to have high safety.

According to some embodiments of this application, 25 mm≤bx≤300 mm.

In the above solution, the dimension of the second section in the width direction of the separator meets the above range, allowing the separator to be adaptable to different specifications of battery cells, and have a wide application range.

According to some embodiments of this application, 50 mm≤a≤600 mm.

In the above solution, the dimension of the battery cell in the width direction of the separator meets the above range. Using a separator with different porosities at different positions can reduce the risk of metal ion precipitation.

According to some embodiments of this application, the battery cell is a lithium-ion battery.

In the above solution, the battery cell is a lithium-ion battery. Using the separator of the above embodiments effectively reduces the risk of lithium precipitation and allows for high safety.

According to a third aspect, an embodiment of this application provides a battery, including the battery cell provided in any one of the foregoing embodiments.

According to a fourth aspect, an embodiment of this application provides an electric device, including the battery provided in any one of the foregoing embodiments, where the battery is configured to provide electrical energy.

According to a fifth aspect, an embodiment of this application provides a method for manufacturing a separator, including: preparing a film; heating the film, where in the film, a temperature of a second section is lower than temperatures of a first section and a third section, and the first section, the second section, and the third section are distributed sequentially in a width direction of the film; and stretching the film to obtain a thin film, where a porosity of the stretched second section is less than both a porosity of the stretched first section and a porosity of the stretched third section.

According to the method for manufacturing a separator in embodiments of this application, heating different positions of the film to different temperatures and stretching the film result in a separator with different porosities at different positions, allowing for easy processing and manufacturing.

According to some embodiments of this application, the stretching the film to obtain a thin film includes synchronously stretching the film in the width direction and the length direction.

In the above solution, synchronously stretching the film in the width direction and the length direction ensures that each region of the film has uniform porosity.

According to some embodiments of this application, the preparing the film includes: mixing polyolefin and a pore-forming agent to obtain a mixture; heating the mixture and extruding the mixture to form a molded substrate; and obtaining a film with micropores through cooling phase separation.

In the above solution, through the above process, a film with micropores can be obtained, ensuring a certain porosity of the separator.

According to some embodiments of this application, after the stretching the film to obtain a thin film, the method for manufacturing a separator further includes: extracting and heat-setting the thin film, and extracting the pore-forming agent to obtain the separator.

In the above solution, extracting and heat-setting the thin film facilitates the molding of the separator.

According to some embodiments of this application, the heating the film includes: heating the first section to 120°C-130°C, heating the second section to 100°C-110°C, and heating the third section to 110°C-120°C.

In the above solution, the first section, the second section, and the third section are heated to the above temperature ranges respectively, facilitating the control of porosities at different positions.

Additional aspects and advantages of the present application will be partly provided in the following description, and partly become evident in the following description or understood through the practice of the present application.

### BRIEF DESCRIPTION OF THE DRAWINGS

To describe the technical solutions in embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application.
FIG. 2 is an exploded view of a battery according to some embodiments of this application.
FIG. 3 is an exploded view of a battery cell according to some embodiments of this application.
FIG. 4 is a schematic structural diagram of an electrode assembly according to some embodiments of this application.
FIG. 5 is a schematic structural diagram of a separator according to some embodiments of this application.
FIG. 6 is a cross-sectional view of an electrode assembly according to some embodiments of this application.
FIG. 7 is a schematic diagram of assembly of a separator and a housing according to some embodiments of this application.
FIG. 8 is a schematic flowchart of a method for manufacturing a separator according to some embodiments of this application.
FIG. 9 is a schematic flowchart of preparation of a film in the method for manufacturing a separator according to some embodiments of this application.
FIG. 10 is a schematic flowchart of the method for manufacturing a separator according to some other embodiments of this application.

In the drawings, the figures are not drawn to actual scale.

Description of reference numerals: 100. battery; 10. box; 11. first sub-box; 12. second sub-box; 20. battery cell; 21. housing; 211. shell; 212. cover; 21a. electrode terminal; 22. electrode assembly; 221. positive electrode plate; 221a. third edge; 221b. fourth edge; 222. negative electrode plate; 222a. first edge; 222b. second edge; 223. main body portion; 224. tab; 30. separator; 30a. seventh edge; 30b. eighth edge; 31. first section; 32. second section; 32a. fifth edge; 32b. sixth edge; 33. third section; 200. controller; 300. motor; and 1000. vehicle.

### DETAILED DESCRIPTION OF THE PREFERRED EMBODIMENT

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described in this application may be combined with other embodiments.

**In** the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "multiple" means more than two (inclusive). Similarly, "multiple groups" means more than two (inclusive) groups, and "multiple pieces" means more than two (inclusive) pieces.

The battery mentioned in this application is a single physical module that includes one or more battery cells for providing a higher voltage and capacity.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. Part of the positive electrode current collector uncoated with the positive electrode active substance layer serves as a positive tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. Part of the negative electrode current collector uncoated with the negative electrode active substance layer serves as a negative tab. The negative electrode current collector may be made of copper, and the negative electrode active substance may be carbon, silicon, or the like. To ensure that a large current passes through without any fusing, multiple positive tabs are provided and stacked together, and multiple negative tabs are provided and stacked together. The separator may be made of PP (polypropylene, polypropylene), PE (polyethylene, polyethylene), or the like.

The electrode assembly of the battery cell includes a positive electrode plate, a negative electrode plate, and a separator. The separator has two functions: one is to act as an insulating layer to prevent internal short circuit in the battery cell caused by contact between the positive electrode plate and the negative electrode plate; and the other is to act as a semi-permeable layer to prevent larger molecules from passing through while allowing smaller charged ions to pass through.

In the related art, the porosity of any position of the separator is uniformly distributed, and metal ions at any position have the same penetration ability. This limits the applicable scenarios, and it is difficult to adjust different efficiencies of metal ion precipitations at different positions of the separator. For example, along the width direction of the separator, the current density in the overlapping region of the negative electrode plate and the positive electrode plate is high. When a separator with a uniformly distributed porosity at any position is used, metal ions are likely to precipitate from the negative electrode plate in this overlapping region. The metal ions that have precipitated out are likely to pierce the separator, leading to short circuit due to contact between the positive electrode plate and the negative electrode plate, thus reducing the safety of the battery cell.

In view of this, to resolve the problem of the uniformly distributed porosity at various positions of the separator leading to lower safety of the battery cell composed of this separator, the inventors have designed a technical solution after in-depth research. This solution is to set different porosities at different positions of the separator in the electrode assembly, so as to alleviate precipitation of metal ions in the electrode assembly.

When such a separator is used in a battery cell, the porosity of the second section in the width direction of the separator is less than the porosities of its adjacent sections. The metal ion penetration ability in the second section is weaker than those in other sections, effectively controlling the penetration efficiency of metal ions. For example, the second section overlapping with the region of the negative electrode plate with a large current density reduces the risk of precipitation of metal ions from the surface of the negative electrode plate, allowing the battery cell to have high safety.

The battery cell disclosed in the embodiments of this application may be used without limitation in electric devices such as vehicles, ships, or aircrafts. A power system of the electric device may be composed of the battery cell, battery, or the like disclosed in this application.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, an example that the electric device is a vehicle 1000 in an embodiment of this application is used for description in the following embodiments.

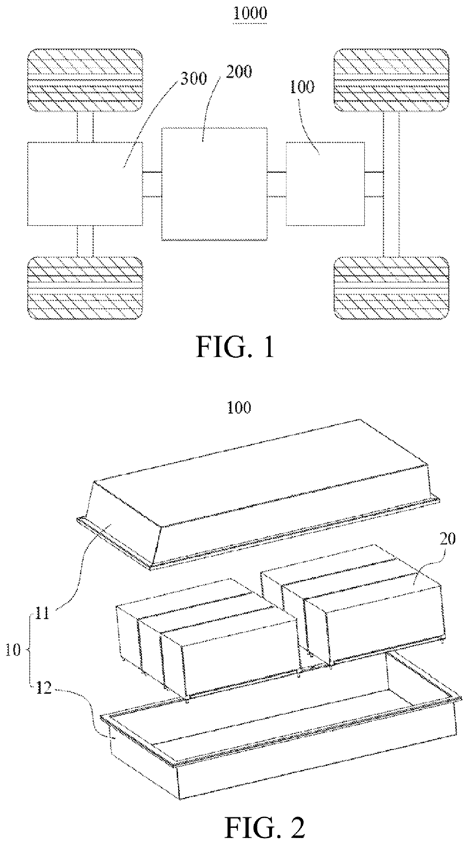

Referring to FIG. 1, FIG. 1 is a schematic structural diagram of a vehicle according to some embodiments of this application. The vehicle 1000 may be a fossil fuel vehicle, a naturalgas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 that is configured for a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000, but also as a driving power source for the vehicle 1000, replacing or partially replacing fossil fuel or natural gas to provide driving traction for the vehicle 1000.

Referring to FIG. 2, FIG. 2 is an exploded view of a battery according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first sub-box 11 and a second sub-box 12. The first sub-box 11 and the second sub-box 12 fit together. The first sub-box 11 and the second sub-box 12 jointly define an accommodating space for accommodating the battery cell 20. The second sub-box 12 may be a hollow structure with one end open, the first sub-box 11 may be a plate structure, and the first sub-box 11 covers an open side of the second sub-box 12, so that the first sub-box 11 and the second sub-box 12 jointly define an accommodating space. The first sub-box 11 and the second sub-box 12 may both be a hollow structure with one side open, and the open side of the first sub-box 11 covers the open side of the second sub-box 12.

In the battery 100, multiple battery cells 20 may be provided, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety of the multiple battery cells 20 is accommodated in the box 10. Certainly, the battery 100 may alternatively be formed in a manner that multiple battery cells 20 are connected in series, parallel, or series-parallel first to form a battery module and then multiple battery modules are connected in series, parallel, or series-parallel to form an entirety which is accommodated in the box 10. The battery 100 may further include other structures. For example, the battery 100 may further include a busbar configured to implement electrical connection between the multiple battery cells 20.

The battery cell 20 may be a secondary battery or a primary battery, and the battery cell 20 may further be a lithium-sulfur battery, a sodium-ion battery, or a magnesium-ion battery, without being limited thereto.

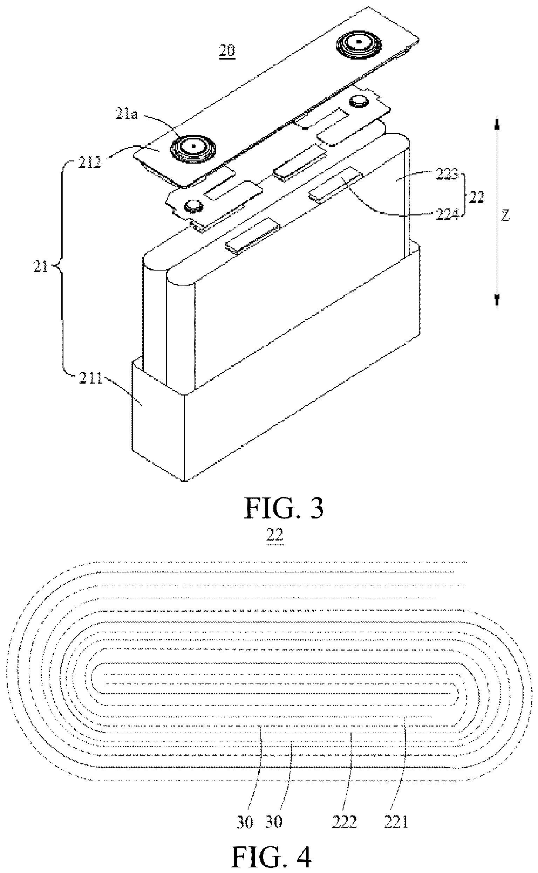

Referring to FIG. 3, FIG. 3 is an exploded view of a battery cell according to some embodiments of this application. As shown in FIG. 3, the battery cell 20 includes a housing 21 and an electrode assembly 22. The electrode assembly 22 is disposed in the housing 21.

The housing 21 includes a shell 211 and a cover 212. The shell 211 has an opening, and the cover 212 seals the opening to isolate the internal environment of the battery cell 20 from the external environment.

The shell 211 is an assembly configured to cooperate with the cover 212 to form an internal environment of the battery cell 20, where the formed internal environment can be used to accommodate the electrode assembly 22, an electrolyte, and other components. The shell 211 and the cover 212 may be independent components. The shell 211 may be of various shapes and sizes. Specifically, a shape of the shell 211 may be determined according to a specific shape and size of the electrode assembly 22. The shell 211 may be made of various materials, such as copper, iron, aluminum, stainless steel, aluminum alloy, and plastic, which are not particularly limited in the embodiments of this application. In this embodiment of the application, a cuboid shell 211 is used as an example for description.

The cover 212 refers to a component that covers an opening of the shell 211 to isolate an internal environment of the battery cell 20 from an external environment thereof. A shape of the cover 212 is not limited and may be adapted to a shape of the shell 211 to match the shell 211. Optionally, the cover 212 may be made of a material with specified hardness and strength (for example, aluminum alloy), so that the cover 212 is less likely to deform when subjected to extrusion and collision, enabling the battery cell 20 to have higher structural strength and improved safety performance. The cover 212 may be provided with functional components such as an electrode terminal 21a. The electrode terminal 21a may be configured to be electrically connected to the electrode assembly 22 for outputting or inputting electrical energy of the battery cell 20. The cover 212 may also be made of various materials, such as copper, iron, aluminum, stainless steel, aluminum alloy, and plastic, which are not particularly limited in the embodiments of this application. In some embodiments, an insulation structure may also be provided at an inner side of the end cover 212. The insulation structure may be configured to isolate an electrically connected component in the shell 211 from the end cover 212 to reduce a risk of short circuit. For example, the insulation structure may be made of plastic, rubber, or the like.

The electrode assembly 22 is a component in which electrochemical reactions occur in the battery cell 20. The shell 211 may include one or more electrode assemblies 22.

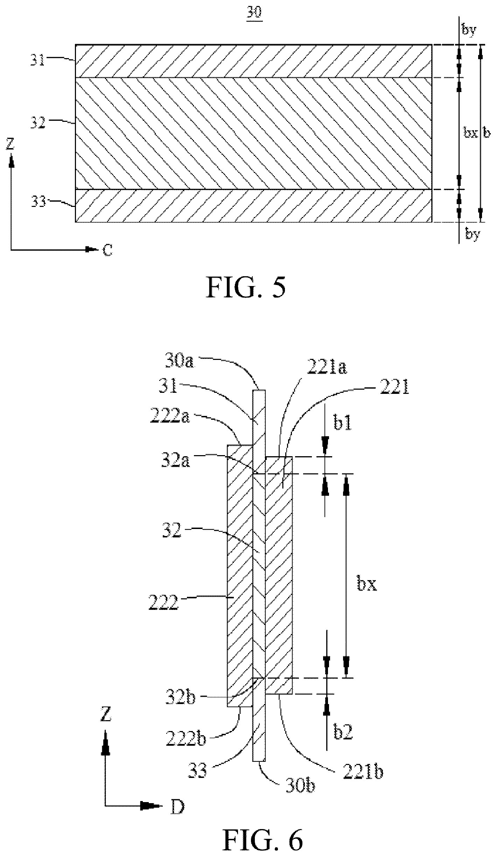

Refer to FIGs. 4 to 6. FIG. 4 is a schematic structural diagram of the electrode assembly according to some embodiments of this application. In FIG. 4, the electrode assembly 22 is a wound electrode assembly. FIG. 5 is a schematic structural diagram of the separator according to some embodiments of this application. FIG. 6 is a cross-sectional view of the electrode assembly according to some embodiments of this application, and FIG. 6 shows the distribution of the separator, the negative electrode plate, and the positive electrode plate in the width direction of the separator. According to some embodiments of this application, the electrode assembly 22 includes a positive electrode plate 221, a negative electrode plate 222, and a separator 30, and the separator 30 is disposed between the positive electrode plate 221 and the negative electrode plate 222; and the separator 30 includes a first section 31, a second section 32, and a third section 33 arranged sequentially in a width direction thereof, and a porosity of the second section 32 is less than both a porosity of the first section 31 and a porosity of the third section 33.

The positive electrode plate 221, the separator 30, and the negative electrode plate 222 are stacked or wound to form the electrode assembly 22. In other words, the electrode assembly 22 may be a wound electrode assembly or a laminated electrode assembly.

The separator 30 is configured to separate the positive electrode plate 221 and the negative electrode plate 222 to prevent short circuit due to internal contact between the positive electrode plate 221 and the negative electrode plate 222. In addition, metal ions can penetrate the separator 30 and move between the positive electrode plate 221 and the negative electrode plate 222.

Parts of the positive electrode plate 221 and the negative electrode plate 222 with active substances constitute a main body portion 223 of the electrode assembly 22, while parts of the positive electrode plate 221 and the negative electrode plate 222 without active substances each constitute a tab 224. A positive tab and a negative tab may both be located at one end of the main body portion 223 or be located at two ends of the main body portion 223 respectively.

In the manufacturing process, the separator 30 is in a roll form, with the width direction of the separator 30 being perpendicular to the length direction of the separator 30. In a wound electrode assembly, the width direction of the separator 30 is parallel to the winding axis of the electrode assembly 22. In a laminated electrode assembly 22, the width direction of the separator 30 may be parallel to the width direction of the positive electrode plate 221 or the negative electrode plate 222.

In the figures, the direction indicated by the letter Z may be the width direction, the direction indicated by the letter C may be the length direction, and the direction indicated by the letter D may be the thickness direction. The width direction of the separator 30, the width direction of the positive electrode plate 221, and the width direction of the negative electrode plate 222 may be parallel to the direction Z. The length direction of the separator 30, the length direction of the positive electrode plate 221, and the length direction of the negative electrode plate 222 may be parallel to the direction D. The thickness direction of the separator 30, the thickness direction of the positive electrode plate 221, and the thickness direction of the negative electrode plate 222 may be parallel to the direction D.

The first section 31, the second section 32, and the third section 33 are sequentially distributed along the width direction (direction Z) of the separator 30, with the second section 32 located between the first section 31 and the third section 33 in the width direction of the separator 30.

The porosity of the second section 32 is less than both the porosity of the first section 31 and the porosity of the third section 33, ensuring different porosities of different parts of the separator 30. Different parts of the separator 30 have different metal ion penetration abilities, thereby controlling the metal ion penetration efficiency of different parts. This is suitable for scenarios with different requirements for metal ion penetration ability, that is, a wider range of scenarios.

In the battery cell 20, metal ions precipitate from different positions of the negative electrode plate 222. With the use of the separator 30 of this embodiment of this application, regions with different porosities of the separator 30 correspond to different regions of the negative electrode plate 222, which can effectively alleviate precipitation of metal ions from the surface of the negative electrode plate 222. For example, in the battery cell 20, the porosity of the second section 32 is small. When the position of the second section 32 corresponds to the region of the electrode assembly 22 with the current concentrated, the penetration efficiency of metal ions can be effectively controlled, thereby reducing the risk of precipitation of metal ions from the surface of the negative electrode plate 222 at a position corresponding to the second section 32, allowing the battery cell 20 to have high safety.

The test method for porosity may be as follows:

Crumple the separator 30 (sample) into a ball and insert it into a sample cup, place the sample cup with the sample in a true density tester, seal the test system, use a gas displacement method, introduce helium gas, and detect the pressure of the gas in the sample chamber and the expansion chamber. Then, calculate the true volume of the sample according to the ideal gas state equation (PV=nRT) to obtain the porosity of the sample under test. In the equation: P is the pressure (Pa), V is the gas volume (m³), T is the temperature (K), n is the amount of substance of a gas (mol), and R is a molar gas constant (also known as a universal gas constant) (J/(mol.K)).

The volume of the sample cup may be 3.5 cm³, and the analysis gas is helium.

Porosity is the percentage of the pore volume in the total volume of the sample. Porosity=(V1-V2)/V1*100%, where V1 is an apparent volume of the sample, and V2 is the true volume of the sample.

According to the electrode assembly of the embodiments of this application, setting the porosity of the second section 32 to be different from the porosity of the first section 31 and the porosity of the third section 33 results in different porosities of the different portions of the separator 30, such that different portions adapt to different metal ion penetration abilities. This can alleviate precipitation of metal ions from the surface of the negative electrode plate 222, such that the battery cell 20 composed of this electrode assembly 22 has high safety.

Referring to FIG. 6, according to some embodiments of this application, the negative electrode plate 222 has a first edge 222a and a second edge 222b opposite each other in a width direction thereof, the first edge 222a falls into the first section 31, and the second edge 222b falls into the third section 33.

The first edge 222a and the second edge 222b are the edges of the negative electrode plate 222 arranged opposite each other in the width direction (direction Z) thereof. The extension directions of the first edge 222a and the second edge 222b may be perpendicular to the width direction of the negative electrode plate 222. It should be noted that the tab 224 of the negative electrode plate 222 may extend from the first edge 222a and/or the second edge 222b.

The first edge 222a falls into the first section 31, and the second edge 222b falls into the third section 33. This means that when observed in the thickness direction (direction D) of the negative electrode plate 222, the projection of the first edge 222a falls into the projection of the first section 31, and the projection of the second edge 222b falls into the projection of the third section 33.

In the above solution, observed along the thickness direction (direction D) of the negative electrode plate 222, a projection of the first edge 222a falls into a projection of the first section 31, a projection of the second edge 222b falls into a projection of the third section 33, and a projection of the second section 32 has a large overlapping area with a projection of the negative electrode plate 222 in the width direction thereof. This can effectively weaken the ability of metal ions to penetrate the second section 32, thereby alleviating precipitation of metal ions from the surface of the negative electrode plate 222.

Referring to FIG. 6, according to some embodiments of this application, the positive electrode plate 221 has a third edge 221a and a fourth edge 221b opposite each other in a width direction thereof, the third edge 221a falls into the first section 31, and the fourth edge 221b falls into the third section 33.

The third edge 221a and the fourth edge b are the edges of the positive electrode plate 221 that are opposite in the width direction (direction Z) thereof, and the extension directions of the third edge 221a and the fourth edge b may be perpendicular to the width direction of the positive electrode plate 221. The third edge 221a is closer to the first edge 222a than the fourth edge 221b, and the fourth edge 221b is closer to the second edge 222b than the third edge 221a.

The third edge 221a falls into the first section 31, and the fourth edge 221b falls into the third section 33. This means that when observed in the thickness direction (direction D) of the positive electrode plate 221, the projection of the third edge 221a falls into the projection of the first section 31, and the projection of the fourth edge 221b falls into the projection of the third section 33.

In the above solution, observed along the thickness direction (direction D) of the positive electrode plate 221, a projection of the third edge 221a falls into a projection of the first section 31, a projection of the fourth edge 221b falls into a projection of the third section 33, and a projection of the second section 32 has a large overlapping area with a projection of the positive electrode plate 221 in the width direction thereof. This can effectively weaken the ability of metal ions to penetrate the second section 32, reducing the amount of metal ions moving from the positive electrode plate 221 to the negative electrode plate 222, thereby alleviating precipitation of metal ions from the surface of the negative electrode plate 222.

It should be noted that the projection of the third edge 221a of the positive electrode plate 221 may be flush with the boundary edge of the projection of the first section 31 and the projection of the second section 32, or the projection of the fourth edge 221b of the positive electrode plate 221 may be flush with the boundary edge of the projection of the third section 33 and the projection of the second section 32, so that a region of the positive electrode plate 221 corresponding to the separator 30 has at least two regions with different porosities.

Referring to FIG. 6, according to some embodiments of this application, in the width direction (direction Z) of the separator 30, two ends of the positive electrode plate 221 extend beyond two ends of the second section 32 by dimensions b1 and b2 respectively, and a dimension of the second section 32 in the width direction of the separator 30 is bx, satisfying 0<b1≤bx/2, and/or 0<b2≤bx/2.

In the width direction (direction Z) of the separator 30, the two opposite ends of the positive electrode plate 221 extend beyond the two opposite ends of the second section 32. For example, the second section 32 has a fifth edge 32a and a sixth edge 32b opposite each other in the width direction of the separator 30. The fifth edge 32a is closer to the third edge 221a of the positive electrode plate 221 than the sixth edge 32b, and the sixth edge 32b is closer to the fourth edge 221b of the positive electrode plate 221 than the fifth edge 32a.

The third edge 221a extends beyond the fifth edge 32a, and the dimension by which the third edge 221a extends beyond the fifth edge 32a may be b1. The fourth edge 221b extends beyond the sixth edge 32b, and the dimension by which the fourth edge 221b extends beyond the sixth edge 32b may be b2. In other embodiments, the dimension by which the third edge 221a extends beyond the fifth edge 32a may be b2, and the dimension by which the fourth edge 221b extends beyond the sixth edge 32b may be b1.

The dimension bx of the second section 32 in the width direction of the separator 30 may be the distance between the fifth edge 32a and the sixth edge 32b.

In the above solution, the dimensions by which the two ends of the positive electrode plate 221 extend beyond the two ends of the second section 32 meet the above range, allowing a portion of the separator 30 corresponding to the overlapping region of the positive electrode plate 221 and negative electrode plate 222 to have two different porosities, and resulting in different metal ion penetration capabilities within the overlapping region. This can weaken the metal ion penetration ability in a partial region, thereby alleviating precipitation of metal ions from the surface of the negative electrode plate 222. If b1 or b2 is greater than bx/2, the area of the overlapping region between the second section 32 and the positive electrode plate 221 is small, and the porosity of the overlapping region with a large area between the separator 30 and the positive electrode plate 221 is high, which is likely to cause metal ions to precipitate from the surface of the negative electrode plate.

Optionally, b1 may be bx/7, bx/6, bx/5, bx/4, bx/3, or bx/2. B2 may be bx/7, bx/6, bx/5, bx/4, bx/3, or bx/2.

According to some embodiments of this application, bx/5≤b1≤bx/3, and/or bx/5≤b2≤bx/3.

In the above solution, in a case of bx/5≤b1≤bx/3 and/or bx/5≤b2≤bx/3 instead of 0<b1≤bx/2 and/or 0<b2≤bx/2, the precipitation of metal ions from the surface of the negative electrode plate 222 can be alleviated effectively, and more metal ions penetrate the overlapping region, allowing a large amount of current to flow through the electrode assembly 22.

Referring to FIG. 6, according to some embodiments of this application, in the width direction (direction Z) of the separator 30, two opposite ends of the negative electrode plate 222 extend beyond two opposite ends of the positive electrode plate 221 respectively, and two opposite ends of the separator 30 extend beyond the two opposite ends of the negative electrode plate 222 respectively.

As shown in FIG. 6, the negative electrode plate 222 has a first edge 222a and a second edge 222b opposite each other in the width direction thereof, the positive electrode plate 221 has a third edge 221a and a fourth edge 221b opposite each other in the width direction thereof, and the separator 30 has a seventh edge 30a and an eighth edge 30b opposite each other in the width direction of the separator 30. In the width direction of the separator 30, the first edge 222a extends beyond the third edge 221a, the seventh edge 30a extends beyond the first edge 222a, the second edge 222b extends beyond the fourth edge 221b, and the eighth edge 30b extends beyond the second edge 222b.

In the above solution, the two opposite ends of the negative electrode plate 222 respectively extend beyond the two opposite ends of the positive electrode plate 221, effectively alleviating precipitation of metal ions from the surface of the negative electrode plate 222. The two opposite ends of the separator 30 respectively extend beyond the two opposite ends of the negative electrode plate 222, reducing the risk of short circuit due to contact between the positive electrode plate 221 and the negative electrode plate 222, such that the battery cell 20 composed of this electrode assembly 22 has high safety.

According to some embodiments, the porosity of the second section 32 is K2, satisfying 25%≤K2≤35%.

Optionally, K2 may be 25%, 26%, 27%, 28%, 29%, 30%, 31%, 32%, 33%, 34%, or 35%.

In the above solution, the porosity K2 of the second section 32 meets the above range, and when applied to the battery cell 20, it can meet the requirement for metal ion penetration while also limiting the metal ion penetration efficiency. When the separator 30 is applied to a battery cell 20, if the porosity of the second section 32 is small (for example, less than 25%), the ability of metal ions to penetrate the separator 30 is hindered, and the metal ion penetration rate is low, resulting in poor performance of the battery cell 20. If the porosity of the second section 32 is large (for example, greater than 35%), the metal ion penetration efficiency is high, which is likely to cause metal ions to precipitate from the surface of the negative electrode plate 222, thus causing safety risks.

According to some embodiments of this application, 28%≤K2≤32%.

Optionally, K2 may be 28%, 28.5%, 29%, 29.5%, 30%, 30.5%, 31%, 31.5%, or 32%.

In the above solution, in a case of 28%≤K2≤32% instead of 25%≤K2≤35%, a good metal ion penetration ability is ensured and the metal ion penetration efficiency can be limited.

According to some embodiments of this application, the porosity of the first section 31 is equal to the porosity of the third section 33.

In the above solution, the porosity of the first section 31 is the same as the porosity of the third section 33, facilitating processing and manufacturing.

According to some embodiments of this application, the porosity of the first section 31 is K1, and the porosity of the third section 33 is K3, satisfying 35%≤K1=K395%.

Optionally, K1 (K3) may be 35%, 36%, 37%, 38%, 39%, 40%, 41%, 42%, 43%, 44%, or 45%.

In the above solution, the porosity of the first section 31 and the porosity of the third section 33 meet the above range. When applied to a battery cell 20, they have both a high metal ion penetration ability and a good electrolyte retention ability. If K1 (K3) is small (for example, less than 35%), the metal ion penetration ability is weak and the metal ions are likely to precipitate from the surface of the negative electrode plate 222; and if K1 (K3) is large (for example, greater than 45%), the battery cell 20 composed of this separator 30 is prone to self-discharge, reducing the capacity of the battery cell 20.

According to some embodiments of this application, 38%≤K1=K3≤2%.

Optionally, K1 (K3) may be 38%, 38.5%, 39%, 39.5%, 40%, 40.5%, 41%, 41.5%, or 42%.

In the above solution, in a case of 38%≤K1=K3≤42% instead of 35%≤K1=K3≤45%, the separator 30 has a good metal ion penetration ability when applied to a battery cell 20, reducing the risk of metal ions precipitating from the negative electrode plate 222, and the risk of self-discharge in the battery cell 20.

According to some embodiments of this application, the porosity of the first section 31 is greater than the porosity of the third section 33.

In the battery cell 20, due to charge and discharge cycles, the electrolyte is consumed. The electrolyte is replenished slowly in the upper part of the separator 30 in the height direction of the battery cell 20, and reabsorption is difficult. This is likely to cause metal ion disconnection, resulting in metal ion precipitation from the negative electrode plate 222 at the corresponding position. When the width direction of the separator 30 is parallel to the height direction of the battery cell 20, and the first section 31 is above the third section 33, the porosity of the first section 31 is greater than the porosity of the third section 33. The first section 31 ensures a strong metal ion penetration ability, which can reduce the risk of precipitation of metal ions from the surface of the negative electrode plate 222, allowing the battery cell 20 to have high safety.

In the above solution, the porosity of the first section 31 is greater than the porosity of the third section 33, allowing the separator 30 to have multiple regions with different porosities, which can meet the requirement for different metal ion penetration abilities at different positions.

According to some embodiments of this application, the porosity of the first section 31 is K1, and the porosity of the third section 33 is K3, respectively satisfying 45%≤K1≤55%, and 35%≤K3≤45%.

Optionally, the porosity K1 of the first section 31 may be 45%, 46%, 47%, 48%, 49%, 50%, 51%, 52%, 53%, 54%, or 55%.

Optionally, the porosity K3 of the third section 33 may be 35%, 36%, 37%, 38%, 39%, 40%, 41%, 42%, 43%, 44%, or 45%.

In the above solution, when the separator 30 is applied to a battery cell 20, the porosity K1 of the first section 31 and the porosity K3 of the third section 33 meet the above range. The separator 30 has different metal ion penetration abilities to adapt to different scenarios. For example, when the width direction of the separator 30 is parallel to the height direction of the battery cell 20, and the first section 31 is above the third section 33, 45%≤K1≤55% and 35%≤K3≤45% can reduce the risk of precipitation of metal ions from the negative electrode plate 222, allowing for high safety of the battery cell 20. If K1 is small (for example, less than 45%) and K3 is small (for example, less than 35%), metal ions are likely to precipitate from the surface of the negative electrode plate 222. If K1 is large (for example, greater than 55%) and K3 is large (for example, greater than 45%), the battery cell 20 is prone to self-discharge, reducing the capacity of the battery cell 20.

According to some embodiments of this application, 48%≤K1≤52%, and 38%≤K3≤42%.

Optionally, the porosity K1 of the first section 31 may be 48%, 48.5%, 49%, 49.5%, 50%, 50.5%, 51%, 51.5%, or 52%.

Optionally, the porosity K3 of the third section 33 may be 38%, 38.5%, 39%, 39.5%, 40%, 40.5%, 41%, 41.5%, or 42%.

In the above solution, in a case of 48%≤K1≤52% and 38%≤K3≤42% instead of 45%≤K1≤55% and 35%≤K3≤45%, the separator 30 has a good metal ion penetration ability when applied to a battery cell 20, reducing the risk of metal ions precipitating from the negative electrode plate 222, and the risk of self-discharge in the battery cell 20.

Referring to FIG. 5, according to some embodiments of this application, a dimension of the first section 31 in the width direction of the separator 30 is equal to a dimension of the third section 33 in the width direction of the separator 30.

In the above solution, the dimensions of the first section 31 and the third section 33 in the width direction of the separator 30 are equal, facilitating processing and manufacturing.

Referring to FIGs. 3, 5, and 6, according to some embodiments of this application, in a height direction of the battery cell 20, the first section 31 is located above the third section 33.

The height direction of the battery cell 20 refers to the direction of the battery cell 20 parallel to the gravitational direction thereof when the battery cell 20 is placed upright. Optionally, when the battery cell 20 is placed upright, the height direction of the battery cell 20 is parallel to the width direction (direction Z) of the separator 30.

In some embodiments, as shown in FIG. 3, the tab 224 may extend from the main body portion 223 in the height direction of the battery cell 20. In other embodiments, the tab 224 may alternatively extend from the main body portion 223 in the length direction of the battery cell 20.

In the height direction of the battery cell 20, the first section 31, the second section 32, and the third section 33 are distributed from top to bottom. The first section 31 may correspond to the position of the upper part of the negative electrode plate 222 in the height direction of the electrode assembly 22, and the second section 32 may correspond to the position of the middle part of the negative electrode plate 222 in the height direction of the electrode assembly 22. Even if the electrolyte reabsorption in the first section 31 is slow and the current density at the corresponding position of the second section 32 of the battery cell 20 is large, the porosity of the first section 31 is greater than the porosity of the second section 32, such that the first section 31 has a good electrolyte retention ability, and the metal ion penetration ability in the second section 32 is weak. This can alleviate the problem of precipitation of metal ions from the surface of the negative electrode plate 222 at positions corresponding to the first section 31 and the second section 32 in the height direction of the battery cell 20.

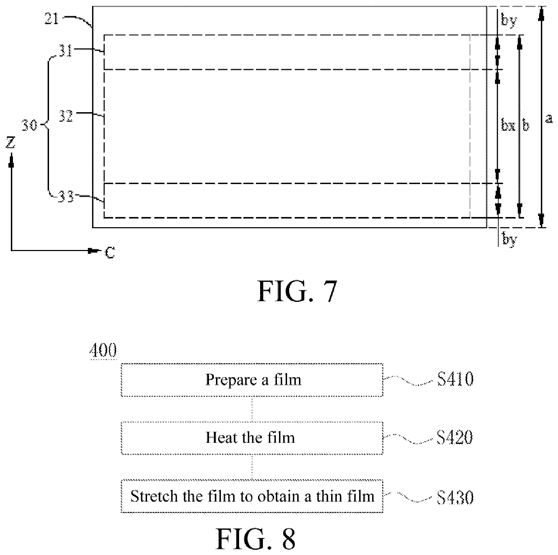

Referring to FIG. 7, FIG. 7 is a schematic assembly diagram of the separator and the housing according to some embodiments of this application. FIG. 7 is also a schematic diagram of fitting of the separator and the housing, with the positive electrode plate, the negative electrode plate, and other functional components hidden. According to some embodiments of this application, in the width direction (direction Z) of the separator 30, a dimension of the housing is a, and the dimension of the second section 32 is bx, satisfying bx=a/2.

In the above solution, the dimension of the second section 32 in the width direction of the separator 30 matches the dimension of the housing in the width direction of the separator 30. Along the width direction of the separator 30, the projection of the second section 32 on the negative electrode plate 222 has a large corresponding region with the negative electrode plate 222, which can alleviate the problem of precipitation of metal ions from the surface of the negative electrode plate 222 at a position corresponding to the second section 32, allowing the battery cell 20 to have high safety.

In an embodiment where the dimension of the first section 31 in the width direction of the separator 30 is equal to the dimension of the third section 33 in the width direction of the separator 30, the width of the separator 30 is b, and the dimension of the first section 31 in the width direction of the separator 30 and the dimension of the third section 33 in the width direction of the separator 30 are both by, satisfying by=(b-bx)/2.

According to some embodiments of this application, 25 mm≤bx≤300 mm.

Optionally, bx may be 25 mm, 30 mm, 50 mm, 75 mm, 100mm, 125 mm, 150 mm, 175 mm, 200 mm, 225 mm, 250 mm, 275 mm, or 300 mm.

In the above solution, the dimension of the second section 32 in the width direction of the separator 30 meets the above range, allowing the separator 30 to be adaptable to different specifications of battery cells 20, and have a wide application range.

According to some embodiments of this application, 50 mm≤a≤600 mm.

Optionally, a may be 50 mm, 100 mm, 150 mm, 200 mm, 250 mm, 300 mm, 350 mm, 400 mm, 450 mm, 500 mm, 550 mm, or 600 mm.

In the above solution, the dimension of the battery cell 20 in the width direction of the separator 30 meets the above range. Using a separator 30 with different porosities at different positions can reduce the risk of metal ion precipitation.

According to some embodiments of this application, the battery cell 20 is a lithium-ion battery.

In the above solution, the battery cell 20 is a lithium-ion battery. Using the separator 30 of the above embodiments effectively reduces the risk of lithium precipitation and allows for high safety.

According to some embodiments of this application, an embodiment of this application provides a battery 100, including the battery cell 20 provided in any one of the foregoing embodiments.

According to some embodiments of this application, an embodiment of this application provides an electric device, including the battery 100 provided in any one of the foregoing embodiments, where the battery 100 is configured to provide electrical energy.

The electric device may be any apparatus or system that uses the battery 100.

The above described the separator 30, the electrode assembly 22, the battery cell 20, the battery, and the electric device of the embodiments of this application. The following will describe the method for manufacturing a separator provided in the embodiments of this application, where parts not described in detail may refer to the aforementioned embodiments.

FIG. 8 is a schematic flowchart of the method for manufacturing a separator according to some embodiments of this application. As shown in FIG. 8, a method 400 for manufacturing a separator, including the following steps:
S410: Prepare a film.
S420: Heat the film, where in the film, a temperature of a second section 32 is lower than temperatures of a first section 31 and a third section 33, and the first section 31, the second section 32, and the third section 33 are distributed sequentially in a width direction of the film.
S430: Stretch the film to obtain a thin film, where a porosity of the stretched second section 32 is less than both a porosity of the stretched first section 31 and a porosity of the stretched third section 33.

According to the method 400 for manufacturing a separator in embodiments of this application, heating different positions of the film to different temperatures and stretching the film result in a separator 30 with different porosities at different positions, allowing for easy processing and manufacturing.

According to some embodiments of this application, the step of stretching the film to obtain a thin film includes synchronously stretching the film in the width direction and the length direction.

The width direction and the length direction correspond to the width direction and the length direction of the molded separator 30.

In the above solution, the film is synchronously stretched in the width direction and length direction to ensure the uniform porosity in all regions of the film. For example, porosities of all parts of the first section 31 are uniform, porosities of all parts of the second section 32 are uniform, and porosities of all parts of the third section 33 are uniform.

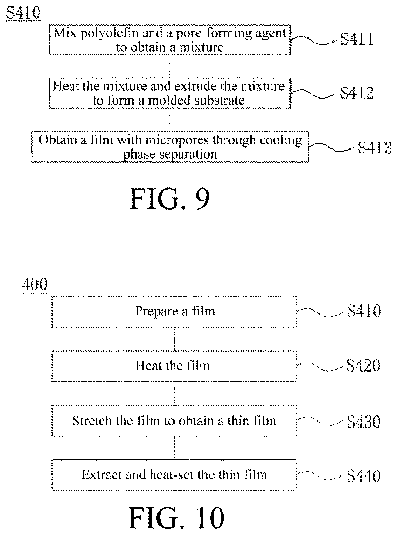

Referring to FIG. 9, FIG. 9 is a schematic flowchart of preparation of a film in the method for manufacturing a separator according to some embodiments of this application. According to some embodiments of this application, the preparing a film includes the following steps:
S411: Mix polyolefin and a pore-forming agent to obtain a mixture.
S412. Heat the mixture and extrude the mixture to form a molded substrate.
S413. Obtain a film with micropores through cooling phase separation.

The polyolefin is selected from any one or combination of homopolymer, copolymer, and multi-segment polymers of ethylene, propylene, 1-butene, 4-methyl-1-pentene, 1-hexene, and 1-octene. For example, the polyolefin may be polyethylene or polypropylene.

The pore-forming agent is a non-volatile substance that is liquid above the melting point of the polyolefin. The pore-forming agent is preferably liquid at room temperature, such as any one or combination of paraffin oil, dioctyl phthalate, dibutyl phthalate, oleyl alcohol, and stearyl alcohol. Optionally, the pore-forming agent is paraffin oil.

In "step S411 of mixing the polyolefin and the pore-forming agent to obtain a mixture", the polyolefin and the pore-forming agent are mixed in a certain proportion and fully stirred for even mixing of the polyolefin and the pore-forming agent.

In "step S413 of obtaining a film with micropores through cooling phase separation", the mixture is phase-separated by cooling to obtain a film with micropores.

In the above solution, through the above process, a film with micropores can be obtained so that the separator 30 has a certain porosity.

Referring to FIG. 10, FIG. 10 is a schematic flowchart of the method for manufacturing a separator according to some other embodiments of this application. According to some embodiments of this application, after the stretching the film to obtain a thin film, the method 400 for manufacturing a separator further includes the following steps:
S440: Extract and heat-set the thin film, and extract the pore-forming agent to obtain the separator 30.

In the above steps, adding an extractant extracts the pore-forming agent in the micropores of the thin film. For the process of extracting the pore-forming agent, reference may be made to the extraction process of the pore-forming agent in the prior art.

In the above solution, extracting and heat-setting the thin film facilitates the molding of the separator 30.

According to some embodiments of this application, the step of heating the film includes the following steps:
heating the first section 31 to 120°C-130°C, heating the second section 32 to 100°C-110°C, and heating the third section 33 to 110°C-120°C.

The different heating temperatures are changed, such that after stretched, regions corresponding to different temperatures have different porosities.

In the above solution, the first section 31, the second section 32, and the third section 33 are heated to the above temperature ranges respectively, facilitating the control of porosities at different positions.

According to some embodiments of this application, this application provides a battery cell 20, and the battery cell 20 includes a housing and an electrode assembly 22, where the electrode assembly 22 is disposed in the housing. The electrode assembly 22 includes a positive electrode plate 221, a negative electrode plate 222, and a separator 30, and the electrode assembly 22 is a wound electrode assembly. The separator 30 includes a first section 31, a second section 32, and a third section 33 sequentially distributed along the width direction thereof, the width direction of the separator 30 is parallel to the height direction of the battery cell 20, the first section 31 is above the third section 33, the porosity of the second section 32 is less than both the porosity of the first section 31 and the porosity of the third section 33, and the porosity of the first section 31 is greater than the porosity of the third section 33. The dimension of the second section 32 in the width direction of the separator 30 is half of the dimension of the housing in the width direction of the separator 30, and the second section 32 corresponds to the region of the battery cell 20 with a large current density. Due to the small porosity of the second section 32, the risk of precipitation of metal ions from the surface of the negative electrode plate 222 can be reduced, and the battery cell 20 has high safety. Because the first section 31 is above the third section 33 and the porosity of the first section 31 is greater than the porosity of the third section 33, the first section 31 allows for a stronger metal ion penetration ability. This may reduce the risk of precipitation of metal ions from the surface of the negative electrode plate 222 at a position corresponding to the first section 31.

According to some embodiments of this application, this application provides a battery cell 20, and the battery cell 20 includes a housing and an electrode assembly 22, where the electrode assembly 22 is disposed in the housing. The electrode assembly 22 includes a positive electrode plate 221, a negative electrode plate 222, and a separator 30, and the electrode assembly 22 is a wound electrode assembly. The separator 30 includes a first section 31, a second section 32, and a third section 33 sequentially distributed along the width direction thereof, the width direction of the separator 30 is parallel to the height direction of the battery cell 20, the first section 31 is above the third section 33, the porosity of the second section 32 is less than both the porosity of the first section 31 and the porosity of the third section 33, and the porosity of the first section 31 is equal to the porosity of the third section 33. The dimension of the second section 32 in the width direction of the separator 30 is half of the dimension of the housing in the width direction of the separator 30, and the second section 32 corresponds to the region of the battery cell 20 with a large current density. Due to the small porosity of the second section 32, the risk of precipitation of metal ions from the surface of the negative electrode plate 222 can be reduced, and the battery cell 20 has high safety. The porosity of the first section 31 is equal to the porosity of the third section 33, facilitating the processing and manufacturing of the separator 30.

Below, taking the battery cell 20 being a lithium-ion battery cell as an example, the effects of porosity on the precipitation of metal ions in the battery cell 20 are described with reference to examples and comparative examples.

In the following examples and comparative examples, the height of the housing 21 of the battery cell 20 is 203.7 mm, the width of the separator 30 is 197 mm, the dimension of the second section 32 in the width direction of the separator 30 is 101.85 mm, the dimension of the first section 31 in the width direction of the separator 30 is equal to the dimension of the third section 33 in the width direction of the separator 30, the width direction of the separator 30 is parallel to the height direction of the battery cell 20, and the first section 31 is above the third section 33. In the width direction of the separator 30, the middle part of the battery cell 20 corresponds to the second section 32 of the separator 30, the top of the battery cell 20 corresponds to the first section 31 of the separator 30, and the bottom of the battery cell 20 corresponds to the third section 33 of the separator 30.

### I. Upright placement test of the battery cell 20

Table 1 shows the effect of different porosities of the separator 30 on the lithium precipitation of the battery cell 20 during charge-discharge cycling when the battery cell 20 is placed upright, where being placed upright means that the height direction of the battery cell 20 is perpendicular to the surface on which the battery cell 20 is placed. In Table 1, in Examples 1 to 7, the porosity of the second section 32 is 28%-32%, the porosity of the third section 33 is 38%-42%, and the porosity of the first section 31 is 48%-52%. In Comparative example 1, the porosity of the second section 32 is 20%, the porosity of the third section 33 is 40%, and the porosity of the first section 31 is 50%. In Comparative example 2, the porosity of the second section 32 is 40%, the porosity of the third section 33 is 40%, and the porosity of the first section 31 is 50%. In Comparative example 3, the porosity of the second section 32 is 30%, the porosity of the third section 33 is 40%, and the porosity of the first section 31 is 32%. In Comparative example 4, the porosity of the second section 32 is 30%, the porosity of the third section 33 is 40%, and the porosity of the first section 31 is 60%.

**Table 1**

| Solution | Porosity of second section | Porosity of third section | Porosity of first section | Lithium precipitation in the middle of battery cell | Lithium precipitation at the top of battery cell |
|---|---|---|---|---|---|
| Example 1 | 28% | 40% | 50% | No | No |
| Example 2 | 32% | 40% | 50% | No | No |
| Example 3 | 30% | 38% | 50% | No | No |
| Example 4 | 30% | 42% | 50% | No | No |
| Example 5 | 30% | 40% | 48% | No | No |
| Example 6 | 30% | 40% | 52% | No | No |
| Example 7 | 30% | 40% | 50% | No | No |
| Comparative example 1 | 20% | 40% | 50% | Yes | No |
| Comparative example 2 | 40% | 40% | 50% | Yes | No |
| Comparative example 3 | 30% | 40% | 32% | No | Yes |
| Comparative example 4 | 30% | 40% | 60% | No | Excessive self-discharge |

According to the above test data, for the porosity of the second section 32, when the porosity of the second section 32 is small (for example, less than 25%) or large (for example, greater than 35%), lithium precipitation occurs in the middle of the battery cell 20 in the height direction of the battery cell 20. For the porosity of the first section 31, when the porosity of the first section 31 is small (for example, less than 35%), lithium precipitation occurs at the top of the battery cell 20 in the height direction of the battery cell 20. When the porosity of the first section 31 is large (for example, greater than 55%), the self-discharge of the battery cell 20 is excessive, and the performance of the battery cell 20 declines.

### II. Test of battery cell 20 placed non-upright (lying flat)

Table 2 shows the effect of different porosities of the separator 30 on lithium precipitation of battery cell 20 during charge-discharge cycling when battery cell 20 is placed non-upright (lying flat). Lying flat means that the height direction of battery cell 20 is parallel to the surface on which battery cell 20 is placed. In Table 2, in Examples 1 to 7, the porosity of the second section 32 is 28%-32%, the porosity of the third section 33 is 38%-42%, and the porosity of the first section 31 is 38%-42%. In Comparative example 1, the porosity of the second section 32 is 20%, the porosity of the third section 33 is 40%, and the porosity of the first section 31 is 40%. In Comparative example 2, the porosity of the second section 32 is 40%, the porosity of the third section 33 is 40%, and the porosity of the first section 31 is 40%.

**Table 2**

| Solution | Porosity of second section | Porosity of third section | Porosity of first section | Lithium precipitation in the middle of battery cell |
|---|---|---|---|---|
| Example 1 | 28% | 40% | 40% | No |
| Example 2 | 32% | 40% | 40% | No |
| Example 3 | 30% | 38% | 40% | No |
| Example 4 | 30% | 42% | 40% | No |
| Example 5 | 30% | 40% | 38% | No |
| Example 6 | 30% | 40% | 42% | No |
| Example 7 | 30% | 40% | 40% | No |
| Comparative example 1 | 20% | 40% | 40% | Yes |
| Comparative example 2 | 40% | 40% | 40% | Yes |

According to the above test data, when the battery cell 20 is placed lying flat, for the porosity of the second section 32, when the porosity of the second section 32 is small (for example, less than 25%) or large (for example, greater than 35%), lithium precipitation occurs in the middle of the battery cell 20 in the height direction of the battery cell 20.

Lithium precipitation detection test process:
I. Battery cell activation
0.33C/1C
1. Keep temperature constant at 25°C, and rest for 5 min.
2. 0.5 C DC to 2.5.
3. Rest for 60 min.
4. 0.33 C CC to 3.65 V, and CV to 0.05 C.
5. Rest for 5 min.
6. 1C DC to 2.5 V(extract C0).
Repeat steps 3-6, and perform cycling 3 times.
II. Cycle lithium precipitation test
Temperature: 25°C
1. After activation of the battery cell, rest for 120 min.
2. xx C0 CC to 3.65 V (xx=product verification test rate).
3. Rest for 5 min.
4. 0.5C0 DC to 2.5 V.
5. Rest for 5 min.
6. Repeat steps 2-5 until a capacity reaches 0.8C0 Ah.
7. Rest for more than 2.0 h at 25°C.
8. 25°C 0.33C0 CC to 3.65 V, and CV to 0.05 C0.

After the test, the battery cell 20 was disassembled, the fully charged interface of the battery cell 20 was observed, and the position and condition of lithium precipitation were determined.

Although this application has been described with reference to some preferred embodiments, various modifications to this application and replacements of the components therein with equivalents can be made without departing from the scope of this application. In particular, as long as there is no structural conflict, the technical features mentioned in each example can be combined in any way. This application is not limited to the specific embodiments disclosed in this specification but includes all technical solutions falling within the scope of the claims.

## Claims

1. An electrode assembly, wherein the electrode assembly comprises a positive electrode plate, a negative electrode plate, and a separator, and the separator is disposed between the positive electrode plate and the negative electrode plate; and
the separator comprises a first section, a second section, and a third section arranged sequentially in a width direction thereof, and a porosity of the second section is less than both a porosity of the first section and a porosity of the third section.

2. The electrode assembly according to claim 1, wherein the negative electrode plate has a first edge and a second edge opposite each other in a width direction thereof, the first edge falls into the first section, and the second edge falls into the third section.

3. The electrode assembly according to claim 1 or 2, wherein the positive electrode plate has a third edge and a fourth edge opposite each other in a width direction thereof, the third edge falls into the first section, and the fourth edge falls into the third section.

4. The electrode assembly according to any one of claims 1 to 3, wherein in the width direction of the separator, two ends of the positive electrode plate extend beyond two ends of the second section by dimensions b1 and b2 respectively, and a dimension of the second section in the width direction of the separator is bx, satisfying 0<b1≤bx/2, and/or 0<b2≤bx/2.

5. The electrode assembly according to claim 4, wherein bx/5≤b1≤bx/3, and/or bx/5≤b2≤bx/3.

6. The electrode assembly according to any one of claims 1 to 5, wherein in the width direction of the separator, two opposite ends of the negative electrode plate extend beyond two opposite ends of the positive electrode plate respectively, and two opposite ends of the separator extend beyond the two opposite ends of the negative electrode plate respectively.

7. The electrode assembly according to any one of claims 1 to 6, wherein the porosity of the second section is K2, satisfying 25%≤K2≤35%.

8. The electrode assembly according to claim 7, wherein 28%≤K2≤32%.

9. The electrode assembly according to any one of claims 1 to 8, wherein the porosity of the first section is equal to the porosity of the third section.

10. The electrode assembly according to claim 9, wherein the porosity of the first section is K1, and the porosity of the third section is K3, satisfying 35%≤K1=K395%.

11. The electrode assembly according to claim 10, wherein 38%≤K1=K3≤2%.

12. The electrode assembly according to any one of claims 1 to 8, wherein the porosity of the first section is greater than the porosity of the third section.

13. The electrode assembly according to claim 12, wherein the porosity of the first section is K1, and the porosity of the third section is K3, respectively satisfying 45%≤K1≤55%, and 35%≤K3≤45%.

14. The electrode assembly according to claim 13, wherein 48%≤K1≤52%, and 38%≤K3≤42%.

15. The electrode assembly according to any one of claims 1 to 14, wherein a dimension of the first section in the width direction of the separator is equal to a dimension of the third section in the width direction of the separator.

16. A battery cell, comprising a housing and the electrode assembly according to claim 15, wherein the electrode assembly is disposed in the housing.

17. The battery cell according to claim 16, wherein in a height direction of the battery cell, the first section is located above the third section.

18. The battery cell according to claim 16 or 17, wherein in the width direction of the separator, a dimension of the housing is a, and the dimension of the second section is bx, satisfying bx=a/2.

19. The battery cell according to claim 18, wherein 25 mm≤bx≤300 mm.

20. The battery cell according to claim 18 or 19, wherein 50 mm≤a≤600 mm.

21. The battery cell according to any one of claims 16 to 20, wherein the battery cell is a lithium-ion battery.

22. A battery, comprising the battery cell according to any one of claims 16 to 21.

23. An electric device, comprising the battery according to claim 22, wherein the battery is configured to provide electrical energy.

24. A method for manufacturing a separator, comprising:
preparing a film;
heating the film, wherein in the film, a temperature of a second section is lower than temperatures of a first section and a third section, and the first section, the second section, and the third section are distributed sequentially in a width direction of the film; and
stretching the film to obtain a thin film, wherein a porosity of the stretched second section is less than both a porosity of the stretched first section and a porosity of the stretched third section.

25. The method for manufacturing a separator according to claim 24, wherein the stretching the film to obtain a thin film comprises:
synchronously stretching the film in a width direction and a length direction.

26. The method for manufacturing a separator according to claim 24 or 25, wherein the preparing a film comprises:
mixing polyolefin and a pore-forming agent to obtain a mixture;
heating the mixture and extruding the mixture to form a molded substrate; and
obtaining a film with micropores through cooling phase separation.

27. The method for manufacturing a separator according to claim 26, wherein after the stretching the film to obtain a thin film, the method for manufacturing a separator further comprises:
extracting and heat-setting the thin film, and extracting the pore-forming agent to obtain the separator.

28. The method for manufacturing a separator according to claim 27, wherein the heating the film comprises:
heating the first section to 120°C-130°C, heating the second section to 100°C-110°C, and heating the third section to 110°C-120°C.
